# EUROPEAN PATENT APPLICATION

(11) **EP 4 734 195 A1**
(43) Date of publication of application: **29.04.2026**
(21) Application number: 25208113.8
(22) Date of filing: 10.10.2025
(51) Int. Cl.: H01M 8/04225, H01M 8/04223, H01M 8/04302, H01M 8/0432, H01M 8/249

(54) **FUEL CELL SYSTEM**

(30) Priority: 23.10.2024 JP 2024186384
(71) Applicant: Honda Motor Co., Ltd., Toyko 105-8404 (JP)
(72) Inventor: HORI, Masashi, Saitama, 351-0193 (JP)
(74) Representative: Weickmann & Weickmann PartmbB

(57) **Abstract**

A fuel cell system (100) includes a plurality of fuel cells (101), and a control unit (102) configured to control the plurality of fuel cells (101). Each of the plurality of fuel cells (101) includes a temperature detection part (42) configured to detect a temperature of the each of the plurality of fuel cells (101), the control unit (102) is configured to control the plurality of fuel cells (101) such that all of the plurality of fuel cells (101) perform a predetermined warm-up operation when the temperature detected by the temperature detection part (42) of at least one of the plurality of fuel cells (101) is equal to or lower than a predetermined temperature (Tα), after a startup of the plurality of fuel cells (101).

## Description

### BACKGROUND OF THE INVENTION

### Field of the Invention

This invention relates to a fuel cell system including a plurality of fuel cells.

### Description of the Related Art

In recent years, technological developments have been made on a fuel cell that contribute to energy efficiency in order to ensure access to energy that is affordable, reliable, sustainable and advanced by more people. As a technology relating to this type of fuel cell, a technique is known in which the fuel cell is warmed up when its temperature falls below a predetermined temperature.

For example, Chinese Patent Application Publication No. 118263477 (CN118263477A) describes a fuel cell control method in which, when a coolant water temperature detected after a predetermined time has elapsed since completion of purging of the fuel cell is equal to or lower than a first predetermined temperature, the fuel cell is started to heat the coolant water, and thereafter, when the coolant water temperature reaches a second predetermined temperature higher than the first predetermined temperature, operation of the fuel cell is stopped.

However, in a fuel cell system having a plurality of fuel cells, there is a possibility of temperature variations occurring in each of the fuel cells. CN118263477A contains no description regarding preferred mode of warming-up for such a fuel cell system.

### SUMMARY OF THE INVENTION

An aspect of the present invention is a fuel cell system including a plurality of fuel cells, and a control unit configured to control the plurality of fuel cells. Each of the plurality of fuel cells includes a temperature detection part configured to detect a temperature of the each of the plurality of fuel cells, and the control unit is configured to control the plurality of fuel cells such that all of the plurality of fuel cells perform a predetermined warm-up operation when the temperature detected by the temperature detection part of at least one of the plurality of fuel cells is equal to or lower than a predetermined temperature, after a startup of the plurality of fuel cells.

### BRIEF DESCRIPTION OF THE DRAWINGS

The objects, features, and advantages of the present invention will become clearer from the following description of embodiments in relation to the attached drawings, in which:
FIG. 1 is a diagram illustrating a schematic configuration of a single unit system included in a fuel cell system according to an embodiment of the present invention;
FIG. 2 is a block diagram schematically illustrating a control configuration of the fuel cell system according to the embodiment of the present invention;
FIG. 3 is a diagram schematically illustrating an example of processing from a start of startup to a start of warming up of the fuel cell system according to the embodiment of the present invention;
FIG. 4 is a flowchart illustrating an example of processing performed by a central controller in FIG. 2;
FIG. 5 is a time chart illustrating an example of the operation of the fuel cell system according to the embodiment of the present invention; and
FIG. 6 is a diagram schematically illustrating transition of operation modes of a plurality of unit systems included in the fuel cell system according to the embodiment of the present invention.

### DETAILED DESCRIPTION OF THE INVENTION

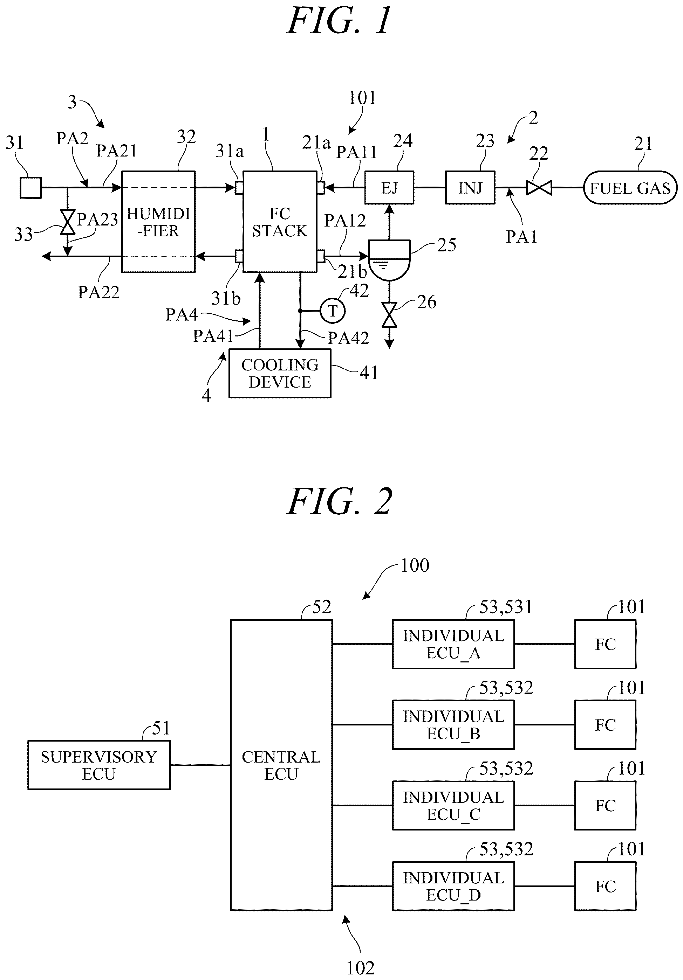

Hereinafter, an embodiment of the present invention will be described with reference to FIGs. 1 to 6. The fuel cell system according to an embodiment of the present invention includes a plurality of fuel cells. This fuel cell system can be installed in large fuel cell vehicles, such as fuel cell buses. Hereinafter, each of the plurality of fuel cells may be referred to as a unit system. By having a plurality of unit systems, the fuel cell system can increase the overall power generation capacity, thereby supplying sufficient power to a travel motor of a large fuel cell vehicle.

The configurations of the plurality of unit systems are identical to each other. FIG. 1 is a diagram illustrating a schematic configuration of a single unit system (fuel cell) 101. As illustrated in FIG. 1, the unit system 101 includes a fuel cell stack 1, a fuel gas supply unit 2 that supplies a fuel gas to the fuel cell stack 1, an oxidant gas supply unit 3 that supplies an oxidant gas to the fuel cell stack 1, and a cooling medium supply unit 4 that supplies a cooling medium to the fuel cell stack 1. The fuel gas is, for example, hydrogen. The oxidant gas is, for example, air containing oxygen. The cooling medium is, for example, water or a coolant liquid containing ethylene glycol or propylene glycol.

The fuel cell stack 1 is configured by stacking a plurality of power generation cells. The power generation cell includes an electrolyte membrane, an anode separator disposed to face one surface of the electrolyte membrane, and a cathode separator disposed to face the other surface of the electrolyte membrane. The electrolyte membrane is, for example, a solid polymer electrolyte membrane. An anode electrode is formed on one surface of the electrolyte membrane, and a fuel gas is supplied to the anode electrode through an anode flow path between the anode separator and the anode electrode. A cathode electrode is formed on the other surface of the electrolyte membrane, and an oxidant gas is supplied to the cathode electrode through the cathode flow path between the cathode separator and the cathode electrode. The anode separator and the cathode separator are arranged in an integrated configuration, with a cooling medium flowing between these anode separator and cathode separator.

In the anode electrode, the fuel gas (hydrogen) supplied to the anode flow path is ionized by an action of a catalyst, passes through the electrolyte membrane, and moves to the cathode electrode side. Electrons generated at this time pass through an external circuit and are extracted as electric energy. In the cathode electrode, the oxidant gas (oxygen) supplied to the cathode flow path reacts with hydrogen ions guided from the anode electrode and electrons moved from the anode electrode to generate water. The generated water gives an appropriate humidity to the electrolyte membrane, and excess water is discharged to an outside.

The fuel gas supply unit 2 includes a fuel gas tank 21 in which fuel gas is stored, and a fuel gas flow path PA1 that guides the fuel gas from the fuel gas tank to the fuel cell stack 1. The fuel gas flow path PA1 includes a fuel gas supply flow path PA11 that extends from the fuel gas tank 21 to the fuel gas inlet port 21a of the fuel cell stack 1, and a fuel gas circulation flow path PA12 that extends from the fuel gas outlet port 21b of the fuel cell stack 1 to an intermediate point of the fuel gas supply flow path PA11. In the fuel gas supply flow path PA11, a shut-off valve 22, an injector 23, and an ejector 24 are arranged. A gas-liquid separator 25 is arranged in the fuel gas circulation flow path PA12.

The shut-off valve 22 is a solenoid valve that opens and closes by electromagnetic force and is disposed between the fuel gas tank 21 and the injector 23. The flow path between the fuel gas tank 21 and the injector 23 is opened or blocked by the shut-off valve 22. The injector 23 has one or more electromagnetic injectors connected in parallel. The fuel gas is injected by the operation of the injector 23, and the injected fuel gas flows towards the ejector 24. The ejector 24 includes a nozzle portion, a suction portion, a merging portion, and a diffuser portion. The fuel gas injected from the injector 23 passes through the small-diameter nozzle portion and then flows into the diffuser portion via the merging portion. The fuel gas that has passed through the ejector 24 is supplied to the fuel cell stack 1 through the fuel gas inlet port 21a.

The fuel gas (fuel exhaust gas) discharged from the fuel gas outlet port 21b is separated into fuel gas and water by the gas-liquid separator 25. The water separated by the gas-liquid separator 25 is discharged externally via the electromagnetic shut-off valve 26. In the ejector 24, the fuel gas separated by the gas-liquid separator 25 is drawn in by the flow of fuel gas injected from the injector 23. The sucked fuel gas merges with the fuel gas that has passed through the nozzle portion of the ejector 24 at the merging portion of the ejector 24, and after being made into a uniform flow in the diffuser portion of the ejector 24, it is supplied to the fuel cell stack 1 via the fuel gas inlet port 21a.

The oxidant gas supply unit 3 includes a compressor 31 that generates highpressure oxidant gas and an oxidant gas flow path PA2 that guides the oxidant gas to the fuel cell stack 1. The oxidant gas flow path PA2 includes an oxidant gas supply flow path PA21 that extends from the compressor 31 to the oxidant gas inlet port 31a of the fuel cell stack 1, an oxidant gas discharge flow path PA22 that discharges oxidant gas (oxidant exhaust gas) from the fuel cell stack 1 via the oxidant gas outlet port 31b, and a bypass flow path PA23 that bypasses the fuel cell stack 1 to guide the oxidant gas from the oxidant gas supply flow path PA21 to the oxidant gas discharge flow path PA22.

The compressor 31 compresses the air taken from the atmosphere and supplies it as oxidant gas. A humidifier 32 is arranged in the oxidant gas supply flow path PA21 and the oxidant gas discharge flow path PA22. In the humidifier 32, the oxidant gas in the oxidant gas supply flow path PA21 is humidified by the moisture contained in the oxidant exhaust gas in the oxidant gas discharge flow path PA22. The bypass flow path PA23 is connected to the oxidant gas supply flow path PA21 upstream of the humidifier 32 and the oxidant gas discharge flow path PA22 downstream of the humidifier 32. An electromagnetic control valve 33 with adjustable opening is placed in the bypass flow path PA23, and by adjusting the opening of control valve 33, the flow rate of oxidant gas bypassing the fuel cell stack 1 can be regulated.

The cooling medium supply unit 4 includes a cooling device 41 and a cooling medium flow path PA4 that connects the cooling device 41 and the fuel cell stack 1. The cooling medium flow path PA4 includes a cooling medium supply flow path PA41 that supplies the cooling medium from the cooling device 41 to the fuel cell stack 1, and a cooling medium discharge flow path PA42 that recirculates the cooling medium from the fuel cell stack 1 to the cooling device 41. A temperature sensor 42 that detects the temperature of the cooling medium, is connected to the cooling medium discharge flow path PA42. Although not illustrated, the cooling device 41 includes a pump that pressurizes and sends the cooling medium towards the fuel cell stack 1, and a heat exchanger that cools the cooling medium after it has passed through the fuel cell stack 1 and increased in temperature.

FIG. 2 is a block diagram schematically illustrating a control configuration of the fuel cell system 100 according to the present embodiment. As illustrated in FIG. 2, the fuel cell system 100 includes: a supervisory controller (a supervisory ECU) 51; a central controller (a central ECU) 52; and a plurality of individual controllers (individual ECUs) 53. Each of the controllers 51 to 53 includes a computer including a CPU, a ROM, a RAM, and a peripheral circuit. The central controller 52 and the plurality of individual controllers 53 will be collectively referred to as a control unit (a control unit) 102, in some cases.

The supervisory controller 51 and the central controller 52 are communicably connected with each other through a communication protocol such as a CAN. The central controller 52 and the individual controller 53 are also communicably connected with each other through a communication protocol such as a CAN. The plurality of individual controllers 53 are provided in the same number as the plurality of (e.g., four) unit systems 101, corresponding to each unit system 101. The individual controllers 53 control the power generation operations of the unit systems 101, such as the start of power generation, stop of power generation, and power generation amount. FIG. 2 illustrates an example where the fuel cell system 100 has four individual controllers 53 (individual ECU_A, individual ECU_B, individual ECU_C, individual ECU_D), but the number of individual controllers 53 can be other than four as long as it is multiple.

The fuel cell system 100 according to the present embodiment is mounted on a vehicle. The supervisory controller 51 calculates a power generation amount (a required power generation amount) required by the vehicle, that is, an entire required power generation amount required for the fuel cell system 100. More specifically, the supervisory controller 51 calculates target drive torque of the travel motor, based on a signal from an accelerator opening sensor, which detects an opening degree of the accelerator pedal, and calculates the required power generation amount necessary for the travel motor to generate the target drive torque. Alternatively, the supervisory controller 51 calculates the required power generation amount, based on a signal from a battery sensor, which detects a remaining capacity SOC (State of Charge) of the battery, so that the remaining capacity of the battery has a predetermined value.

The central controller 52 determines a power generation amount (an individual required power generation amount) for every unit system in accordance with the required power generation amount. More specifically, the central controller 52 determines the presence or absence of an abnormality (a failure) of the unit system 101, based on a signal from the individual controller 53, and determines the individual required power generation amount, based on a determination result. For example, in a case where an abnormality occurs in a single unit system 101 among four unit systems 101, the individual required power generation amount is determined so that the remaining (three) unit systems 101 in which no abnormality occurs share the required power generation amount. Furthermore, the central controller 52 estimates the degree of degradation of the unit system 101, based on a signal from the individual controller 53, and determines the individual required power generation amount, based on an estimation result. Specifically, the individual required power generation amount is determined so that the unit system 101 having a small degree of degradation (high in efficiency) generates the power on a priority basis.

The fuel cell system 100 according to the embodiment of the present invention has an automatic warm-up function of automatically performing a warm-up operation when the temperature of the fuel cell becomes equal to or lower than a predetermined temperature while the fuel cell system 100 is stopped. While the fuel cell system 100 is stopped means a state (a sleep state) in which the operation of the fuel cell system 100 is stopped, for example, while an ignition switch is turned off. Accordingly, it becomes possible to prevent the temperature of the fuel cell from becoming equal to or lower than the predetermined temperature. As a result, moisture in the fuel cell stack can be prevented from freezing, and the unit system 101 is easily activated (low-temperature startup) in a low-temperature environment.

Hereinafter, the automatic warm-up function of the fuel cell system 100 will be described. The temperature of each fuel cell (the fuel cell stack 1) is detected by the temperature sensor 42 in FIG. 1. Among four individual controllers 53, a predetermined individual controller 53 (for example, the individual ECU_A) is the master individual controller 531, which starts actively from a state in which the fuel cell system 100 is stopped without a command from another controller. The remaining individual controllers 53 (the individual ECU_B, the individual ECU_C, and the individual ECU_D) are the slave individual controllers 532, each of which is passively activated by a command from another controller.

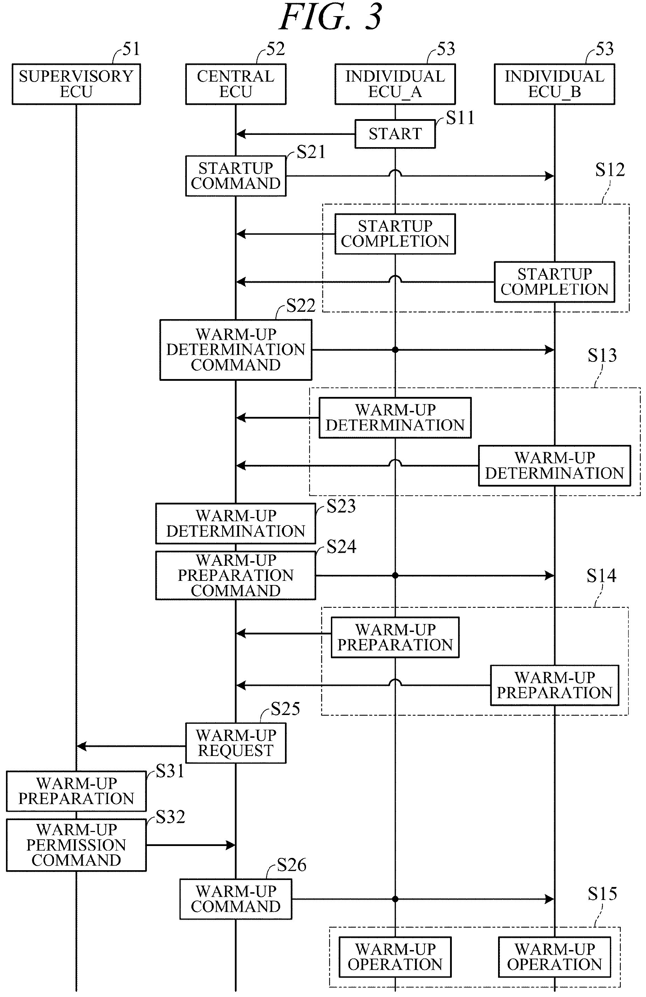

FIG. 3 is a diagram schematically illustrating an example of processing from the start of startup to the start of warming up of the fuel cell system 100. In FIG. 3, for convenience, only the master individual controller 531 (the individual ECU_A) and the single slave individual controller 532 (the individual ECU _B) are illustrated as the individual controllers 53. The remaining slave individual controllers 532 (the individual ECU_C and the individual ECU_D) operate similarly to the individual ECU_B.

As illustrated in FIG. 3, the operation from the stop of the fuel cell system 100 is started when the master individual controller 531 starts (S11). In the master individual controller 531, a target startup time (a master target startup time) for automatically performing the warm-up operation is set before the master individual controller 531 is stopped (before the power is turned off) in the previous operation. The master individual controller 531 is activated when the timer clocks the master target startup time.

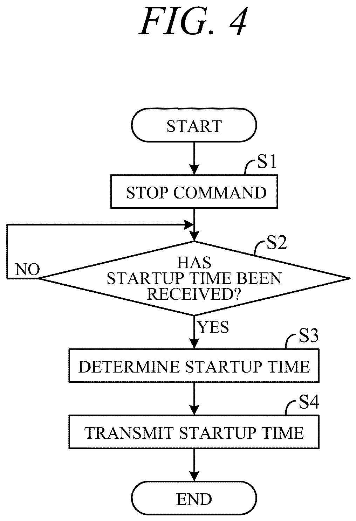

The master target startup time is set by the central controller 52. FIG. 4 is a flowchart illustrating an example of processing in the central controller 52 for setting the master target startup time. The processing illustrated in this flowchart is started, for example, when the ignition switch is turned off and the supervisory controller 51 instructs the central controller 52 to stop the fuel cell system 100.

As illustrated in FIG. 4, first, in S1 (S: processing step), the central controller 52 transmits a stop command to all of the individual controllers 53. Upon receipt of the stop command, the individual controller 53 starts stop processing, and stops (turns off the power) after completing the stop processing. In the stop processing, the individual controller 53 controls the valves for the fuel gas, the oxidant gas, and the cooling medium at predetermined timings, consumes the fuel gas remaining in the fuel cell stack, and then stops power generation in the fuel cell stack 1. In addition, the individual controller 53 performs purging processing as a part of the stop processing. In the purging processing, the oxidant gas is forcibly caused to flow into the fuel cell stack by the driving of the compressor 31 to remove moisture remaining in the fuel cell stack.

Furthermore, each of the plurality of individual controllers 53 calculates the target startup time for performing the warm-up operation, based on the temperature of the fuel cell. The temperature has been detected by the temperature sensor 42. The target startup time is calculated to be shorter as the temperature of the fuel cell (a fuel cell stack 1) is lower, based on a predetermined relationship between a temperature of the fuel cell and the target startup time. The temperatures of the plurality of fuel cells usually vary. In addition, a variation in temperature occurs also due to an error or the like of the temperature sensor 42. For this reason, the target startup times of the plurality of individual controllers 53 also vary. After calculating the target startup time, each of the plurality of individual controllers 53 transmits information on the target startup time to the central controller 52.

In S2, the central controller 52 determines whether information of the target startup time has been received from all of the individual controllers 53. S2 is repeated until an affirmative determination is made. When the affirmative determination is made in S2, the processing proceeds to S3. In S3, the central controller 52 determines the shortest target startup time among the received target startup times, as the master target startup time. Next, in S4, the central controller 52 transmits the master target startup time to a predetermined master individual controller 531 (the individual ECU_A), and ends the processing. At this timing, the master individual controller 531 stores the master target startup time in a memory. In S4, the central controller 52 may transmit a predetermined target startup time that is longer than the master target startup time to the remaining individual controllers 53, that is, all of the slave individual controllers 532. This enables the shortest target startup time based on the lowest temperature among those of the plurality of fuel cells to be set as the master target startup time. As a result, it becomes possible to prevent the moisture in the fuel cell stack from freezing, while reducing the processing load for determining the master target startup time.

The master individual controller 531 starts the timer from the time when the master individual controller 531 is stopped. Then, as illustrated in S11 of FIG. 3, when the timer of the master individual controller 531 clocks the master target startup time, the master individual controller 531 turns on the power, and starts the startup processing. When starting the startup processing, the master individual controller 531 transmits a startup notification to the central controller 52. Upon receipt of the startup notification, the central controller 52 transmits a startup command to all of the slave individual controllers 532 (the individual ECU_B in FIG. 3) in S21. Accordingly, the power of the slave individual controller 532 is turned on, and the startup processing starts.

Upon completion of the startup processing, each of the plurality of individual controllers 53 transmits a startup completion notification to the central controller 52 in S12. The startup completion of the plurality of individual controllers 53 varies. Upon receipt of the startup completion notification from all of the individual controllers 53, the central controller 52 transmits a warm-up determination command for determining the necessity of warming up to the plurality of individual controllers 53 in S22. The warm-up determination command may be transmitted to the individual controller 53 whenever the startup completion notification is received from not all of the individual controllers 53 but each of the individual controllers 53.

Upon receipt of the warm-up determination command, the plurality of individual controllers 53 determine the necessity of warming up in S13. Specifically, the individual controller 53 determines whether the temperature of the fuel cell detected by the temperature sensor 42 is equal to or lower than a predetermined temperature (a warm-up start temperature). The predetermined temperature is, for example, a temperature at which the cooling medium starts freezing or a temperature at which the cooling medium might start freezing. The individual controller 53 determines that the warm-up operation is necessary when the temperature of the fuel cell is equal to or lower than the predetermined temperature, and determines that the warm-up operation is unnecessary when the temperature is higher than the predetermined temperature. Then, the individual controller 53 transmits the determination result to the central controller 52. For example, when it is determined that the warm-up operation is necessary, the individual controller 53 outputs a warm-up request, and transmits the warm-up request to the central controller 52.

Upon receipt of the determination results from all of the individual controllers 53, the central controller 52 determines the necessity of the warm-up operation in S23. Specifically, when the warm-up request is received from at least one of the plurality of individual controllers 53, the central controller 52 determines that the warm-up operation is necessary. In this case, the central controller 52 transmits a warm-up preparation command to the plurality of individual controllers 53 in S24.

Upon receipt of the warm-up preparation command, the individual controller 53 transitions the mode for the warm-up operation in S14, and then transmits a warm-up operation preparation trigger to the central controller 52. In this manner, warming up is not unnecessary, but the system is in a waiting state for warm-up operation permission.

Upon receipt of the warm-up preparation completion notification from all of the individual controllers 53, the central controller 52 transmits a warm-up request to the supervisory controller 51 in S25. Upon receipt of the warm-up request, the supervisory controller 51 starts warm-up preparation in S31. The warm-up preparation includes, for example, processing of instructing valve opening of the fuel gas tank 21, preparing a high voltage to be applied to the fuel cell, and the like. When the warm-up preparation is completed, the supervisory controller 51 transmits a warm-up permission command to the central controller 52 in S32.

Upon receipt of the warm-up permission command, the central controller 52 simultaneously transmits a warm-up command to the plurality of individual controllers 53 in S26. Accordingly, in S15, warm-up preparation such as setting the voltage command value of the fuel cell stack 1 to an initial value is performed, and then each of the plurality of unit systems 101 performs the warm-up operation in accordance with commands from the plurality of individual controllers 53. In this case, low-efficiency power generation in which the efficiency is degraded more than usual is performed. Specifically, the individual controller 53 controls the supply amount of the oxidant gas so that the supply amount of the oxidant gas is smaller than the supply amount of the fuel gas to the fuel cell stack 1. This reduces the air stoichiometric ratio, and increases the thermal energy corresponding to the power loss excluding the power generation energy from the energy extracted by the reaction between hydrogen and oxygen, so that the fuel cell (the fuel cell stack 1) can be promptly warmed up.

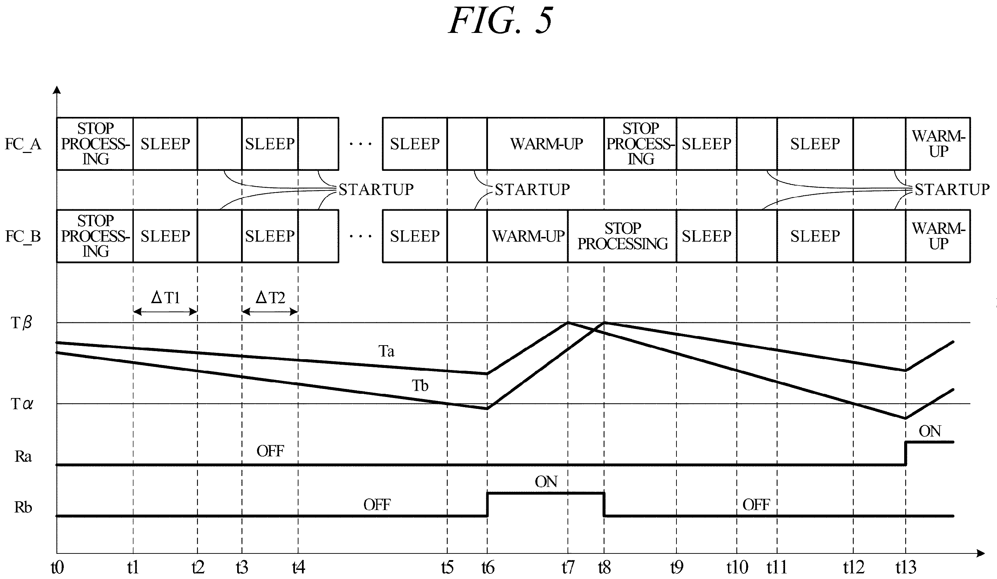

FIG. 5 is a time chart illustrating an example of the operation of the fuel cell system 100. FIG. 5 illustrates changes in states of a pair of unit systems 101 (FC_A and FC_B) among four unit systems 101 (FIG. 2), temperatures (Ta and Tb) of the cooling media of the pair of unit systems 101, and warm-up requests (Ra and Rb) for the pair of unit systems 101 with the lapse of time. The temperature Tα in FIG. 5 is a predetermined warm-up start temperature, and the temperature Tβ is a predetermined warm-up end temperature.

As illustrated in FIG. 5, at time t0, the stop processing of the pair of unit systems 101 is started by turning off the ignition switch. When the stop processing ends at time t1, the pair of unit systems 101 become in the sleep state. FIG. 5 is the time chart in a state in which the vehicle on which the fuel cell system 100 is mounted is placed in a low-temperature environment. Therefore, after the fuel cell system 100 is stopped and before the warm-up operation is performed, the temperatures Ta and Tb of the fuel cells gradually decrease. In the initial state, the temperatures Ta and Tb of the fuel cells are equal to or higher than the warm-up start temperature Tα, and the warm-up requests (Ra and Rb) are off without being output.

A duration ΔT1 of the sleep state corresponds to the master target startup time. Such a duration ΔT is set, based on a lower temperature Tb of the temperatures Ta and Tb of the fuel cells when the stop processing of the pair of unit systems 101 is performed between time t0 and time t1. The duration ΔT1 elapses, and then the pair of unit systems 101 start at time t2. Strictly speaking, one unit system 101 (the master individual controller 531) starts at first, and then the other unit system 101 (the slave individual controller 532) starts. After the unit systems 101 start, the temperatures Ta and Tb of the fuel cells are detected by the temperature sensor 42.

Between time t2 and time t3, the temperatures of the pair of unit systems 101 are both equal to or higher than the predetermined warm-up start temperature Tα. Therefore, the warm-up operation of the unit systems 101 is not performed, and the pair of unit systems 101 become in the sleep state again at time t3. In this situation, the target startup time (a duration ΔT2 of the sleep state) for the next startup of the unit system 101 (the master individual controller 531) is set, based on the temperature Tb of the fuel cell having a lower temperature. The temperature Tb of the fuel cell at time t2 is lower than the temperature Tb of the fuel cell at time t1. Therefore, ΔT2 is shorter than ΔT1.

The sleep state continues for a predetermined duration ΔT2, then the pair of unit systems 101 start at time t4, and the temperatures Ta and Tb of the fuel cells are detected. At this time, the temperatures Ta and Tb of the fuel cells are equal to or higher than the warm-up start temperature Tα. Thereafter, the sleep state and the startup processing of the pair of unit systems 101 are alternately repeated until the temperatures Ta and Tb are equal to or lower than the warm-up start temperature Tα.

While in the startup processing from time t5 to time t6, when the temperature Tb of one of the fuel cells is equal to or lower than the warm-up start temperature Tα, the warm-up request (Rb) is output, and is turned on at time t6. Thus, as described above, the warm-up command is simultaneously transmitted from the central controller 52 to the plurality of individual controllers 53, and the warm-up operation is simultaneously started in the pair of unit systems 101 (FIG. 3).

When the warm-up operation (low-efficiency power generation) is started at time t6, the temperatures Ta and Tb of the fuel cells gradually increase. At time t7, the temperature Ta of the fuel cell of one of the unit systems 101 reaches the warm-up end temperature Tβ, and then the warm-up operation of such one of the unit systems 101 ends. At time t8, the temperature Tb of the fuel cell of the other unit system 101 reaches the warm-up end temperature Tβ, and then the warm-up operation of the other unit system 101 ends. At this timing, the warm-up request (Rb) is turned off. The warm-up request may be turned off when the temperature Tb is equal to or higher than the warm-up start temperature Tα through the warm-up operation. The warm-up operation ends, and then the temperatures Ta and Tb of the fuel cells gradually decrease due to the influence of the external environment.

After the warm-up operation is completed, the pair of unit systems 101 individually perform the stop processing to time t9. The stop processing in this case includes the purging processing. The purging processing of one unit system 101 (FC_B) is started earlier than the purging processing of the other unit system 101 (FC_A). Although not illustrated, the purging processing of one unit system 101 (FC_B) ends earlier, accordingly. When the stop processing ends at time t9, the pair of unit systems 101 are in the sleep state.

Then, the pair of unit systems 101 repeat the startup processing and the sleep state until the temperatures Ta and Tb of the fuel cells are equal to or lower than the warm-up start temperature Tα. In the startup processing from time t12 to time t13, when the temperature Ta of the fuel cell of one unit system 101 (FC_A) is equal to or lower than the warm-up start temperature Tα, the warm-up operation of the pair of unit systems 101 is started again at time t13. This increases the temperatures Ta and Tb of the fuel cells. Thereafter, the warm-up operation is automatically started whenever the temperatures Ta and Tb of the fuel cells are equal to or lower than the warm-up start temperature Tα. After the warm-up operation ends once, another warm-up operation may be set not to be performed until next startup control based on turning on the ignition switch is performed. In other words, it is sufficient if the warm-up operation is performed at least once in the sleep state.

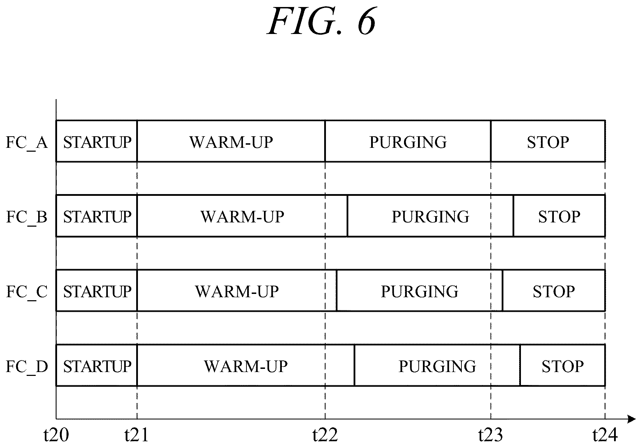

FIG. 6 is a diagram schematically illustrating transition of the operation modes of four unit systems 101 (FC_A, FC_B, FC_C, and FC_D) included in the fuel cell system 100 according to the present embodiment. In the example of FIG. 6, at time t20, all of the unit systems 101 (more specifically, the individual controllers 53) simultaneously start. Then, the startup processing ends at time t21, and then the warm-up operation is simultaneously started in all of the unit systems 101. The timing when the warm-up operation is completed, that is, the timing when the temperature of the fuel cell rises to the warm-up end temperature Tβ is different depending on the individual unit system 101, and the unit system 101 (FC_A) ends the warm-up operation at the earliest timing.

The unit system 101 (FC_A) ends the warm-up operation at time t22, and the purging operation is started. Then, the purging operation ends at time t23, and the stop processing (stop processing after the purging operation) is performed until time t24. Similarly in the other unit systems 101 (FC_B, FC_C, and FC_D), the warm-up operation ends, then the purging operation is started, the purging operation ends, and the stop processing is performed.

According to the present embodiment, the following functions and effects are achievable.
(1) The fuel cell system 100 includes: the plurality of fuel cells (the unit systems 101); and the central controller 52 and the plurality of individual controllers 53, which serve as the control unit 102, and which control the plurality of unit systems 101 (FIG. 2). Each of the plurality of unit systems 101 includes the temperature sensor 42 for detecting the temperature of each of the fuel cell stacks 1, which are included in the plurality of unit systems 101 (FIG. 1). After the plurality of unit systems 101 start, when the temperature detected by the temperature sensor 42 of at least one of the plurality of unit systems 101 is equal to or lower than the warm-up start temperature Tα, the control unit 102 controls the plurality of unit systems 101 so that all of the plurality of unit systems 101 perform a predetermined warm-up operation.
   Although the temperatures of the plurality of unit systems 101 used in the fuel cell system 100 vary, the plurality of unit systems 101 when used in a low-temperature environment have the identical tendencies for the temperature decrease. Therefore, even though the temperatures of some of the unit systems 101 are not equal to or lower than the predetermined temperature Tα, it is considered that the temperature of that unit system will be equal to or lower than the predetermined temperature Tα sooner or later. In consideration of this, in the present embodiment, when the temperature of at least one of the plurality of unit systems 101 is equal to or lower than the warm-up start temperature, the warm-up operation is performed in all of the unit systems 101. Thus, the warm-up operation of the plurality of unit systems 101 is performed at the same time and early, so that the warming up of the fuel cell system 100 can be performed satisfactorily. The plurality of unit systems 101 are simultaneously warmed up, so that the plurality of unit systems 101 can be efficiently controlled.
(2) In a case where after the predetermined warm-up operation, the unit system 101 (FC_A and FC_B in FIG. 5), in which the temperature detected by the temperature sensor 42 is equal to or higher than the warm-up end temperature (a target temperature) Tβ among the plurality of unit systems 101, is defined as a post-warm-up fuel cell, and after the predetermined warm-up operation starts, when any of the plurality of unit systems 101 becomes the post-warm-up fuel cell, the control unit 102 performs controlling every post-warm-up fuel cell so that the post-warm-up fuel cell stops the predetermined warm-up operation and performs the predetermined purging operation (FIGS. 5 and 6). Thus, the start of the purging operation is determined for every unit system 101, so that the purging operation can be promptly achieved after the warm-up operation is completed, and moisture generated in the fuel cell stack in the warm-up operation can be immediately discharged.
(3) When the post-warm-up fuel cell completes the predetermined purging operation, the control unit 102 performs controlling every post-warm-up fuel cell to perform the stop processing of the post-warm-up fuel cell and to stop the operation of the post-warm-up fuel cell (for example, turn off the power) (FIG. 6). In this manner, completion of the purging operation is determined for every unit system 101, so that the inside of fuel cell stack 1 (particularly, the electrolyte membrane) can be prevented from being excessively dried.
(4) The control unit 102 includes: the central controller 52, which determines a required power generation amount required for each of the plurality of unit systems 101; and the plurality of individual controllers 53, each of which individually controls each of the plurality of unit systems 101 to generate the power in accordance with the required power generation amount determined by the central controller 52 (FIG. 2). The plurality of individual controllers 53 determine the necessity of warming up after the unit system 101 starts, based on the temperature detected by the temperature sensor 42. The unit system 101 is controlled by each of the plurality of individual controllers 53 (FIG. 3). When at least one of the plurality of individual controllers 53 determines that warming up is necessary, the central controller 52 outputs a warm-up command to all of the plurality of individual controllers 53 so that the plurality of unit systems 101 perform a predetermined warm-up operation (FIG. 3). This eliminates the need for the plurality of individual controllers 53 to communicate with one another for synchronization, so that the processing load on the individual controllers 53 can be reduced.
(5) The plurality of individual controllers 53 include: the single master individual controller 531, which starts at a predetermined timing after the plurality of unit systems 101 are stopped; and the slave individual controller 532 other than the master individual controller 531. After the master individual controller 531 starts, upon receipt of a signal from the master individual controller 531, the central controller 52 outputs an activation command to the slave individual controller 532 so as to activate the slave individual controller 532 (FIG. 3). This facilitates startup of the fuel cell system 100.

The above embodiments can be modified into various forms. Hereinafter, some modifications will be described. In the above embodiment, among the plurality of individual controllers 53, a predetermined individual controller 53 (individual ECU_A) is set as a master individual controller 531 (master individual control unit), and the remaining individual controllers 53 (such as individual ECU_B) are set as slave individual controllers 532 (slave individual control units). However, the individual controller 53 having the shortest target startup time calculated by each individual controller 53 may be set as the master individual controller 531. That is, the master individual controller 531 may be configured to be changed in accordance with the temperatures of the fuel cells each time the fuel cell system 100 is stared.

In the above embodiment, the temperature of the cooling medium detected by the temperature sensor 42 is treated as the temperature of the fuel cell. However, the temperature of another portion having a correlation with the temperature of the fuel cell may be detected instead, and the configuration of a temperature detection part is not limited to that described above. In the above embodiment, the control unit 102 is configured by the central controller 52 (a master control unit) and the individual controllers 53 (individual control units). However, as long as the plurality of fuel cells are controlled such that all of the plurality of fuel cells perform a predetermined warm-up operation when the temperature of at least one of the plurality of fuel cells is equal to or lower than a predetermined temperature after the plurality of fuel cells are started, the configuration of a control unit is not limited to that described above.

In the above embodiment, an example of applying the fuel cell system 100 to a fuel cell vehicle is described. However, the fuel cell system of the present invention can also be applied to various movable bodies having a plurality of fuel cells, and can also be applied to non-movable bodies.

The above embodiment can be combined as desired with one or more of the above modifications. The modifications can also be combined with one another.

According to the present invention, it is possible to effectively perform warm-up of a fuel cell system including a plurality of fuel cells.

Above, while the present invention has been described with reference to the preferred embodiments thereof, it will be understood, by those skilled in the art, that various changes and modifications may be made thereto without departing from the scope of the appended claims.

## Claims

1. A fuel cell system comprising:
a plurality of fuel cells (101); and
a control unit (102) configured to control the plurality of fuel cells (101), wherein
each of the plurality of fuel cells (101) includes a temperature detection part (42) configured to detect a temperature of the each of the plurality of fuel cells (101), and
the control unit (102) is configured to control the plurality of fuel cells (101) such that all of the plurality of fuel cells (101) perform a predetermined warm-up operation when the temperature detected by the temperature detection part (42) of at least one of the plurality of fuel cells (101) is equal to or lower than a predetermined temperature (Tα), after a startup of the plurality of fuel cells (101).

2. The fuel cell system according to claim 1, wherein
a fuel cell among the plurality of fuel cells (101), whose temperature detected by the temperature detection part (42) after the predetermined warm-up operation has reached or exceeded a target temperature (Tβ), is defined as a post-warm-up fuel cell, and
the control unit (102) is configured to control the plurality of fuel cells (102) so as to stop the predetermined warm-up operation for the post-warm-up fuel cell and perform a predetermined purging operation, when any of the plurality of fuel cells (101) becomes the post-warm-up fuel cell after a start of the predetermined warm-up operation.

3. The fuel cell system according to claim 2, wherein
the control unit (102) is configured to control the plurality of fuel cells (101) so as to stop an operation of the post-warm-up fuel cell when the post-warm-fuel cell completes the predetermined purging operation.

4. The fuel cell system according to any one of claims 1 to 3, wherein
the control unit (102) includes
a central control unit (52) configured to determine an individual required power generation amount required for the each of the plurality of fuel cells (101), and
a plurality of individual control units (53) each configured to individually control the each of the plurality of fuel cells (101) to perform power generation according to the individual required power generation amount determined by the central control unit (52),
the plurality of individual control units (53) is configured to determine whether the predetermined warm-up operation after a startup of the each of the plurality of fuel cells (101) is necessary, based on the temperature detected by the temperature detection part (42), and
the central control unit (52) is configured to output a warm-up command to all of the plurality of individual control units (53) such that the plurality of fuel cells (101) perform the predetermined warm-up operation when it is determined that the predetermined warm-up operation for at least one of the plurality of fuel cells (101) is necessary.

5. The fuel cell system according to claim 4, wherein
the plurality of individual control units (53) include one master individual control unit (531) starting at a predetermined timing after the plurality of fuel cells (101) have been stopped, and a slave individual control unit (532) other than the master individual control unit (531), and
the central control unit (52) is configured to output an activation command to the slave individual control unit (532) such that the slave individual control unit (532) is activated when the central control unit (52) receives a signal from the master individual control unit (531) after a startup of the master individual control unit (531).

6. The fuel cell system according to claim 5, wherein
the each of the plurality of individual control units (53) is configured to calculate a target startup time based on the temperature detected by the temperature detection part (42) after the each of the plurality of fuel cells (101) has been stopped,
the central control unit (52) is configured to, when the central control unit receives information on a plurality of target startup times from the plurality of individual control units (53), determine a shortest target startup time among the plurality of target startup times as a master target startup time, and transmit the master target startup time to the master individual control unit (531), and
the master individual control unit (531) is configured to start a timer from a stop of the master individual control unit (531), and start an operation when the master target startup time has elapsed.

7. The fuel cell system according to claim 6, wherein
the each of the plurality of individual control units (53) is configured to calculate the target startup time such that the target startup time is shorter as the temperature detected by the temperature detection part (42) after a stop of the each of the plurality of fuel cells (101) decreases.
